# EUROPÄISCHE PATENTANMELDUNG

(11) **EP 2 108 932 A2**
(43) Veröffentlichungstag der Anmeldung: **14.10.2009**
(21) Anmeldenummer: 09005254.9
(22) Anmeldetag: 09.04.2009
(51) Int. Cl.: G01L 3/04

(54) **Drehmomentsensor durch axialer Verschiebung**

(30) Priorität: 11.04.2008 DE 102008018362
(71) Anmelder: Liebherr-Aerospace Lindenberg GmbH, 88161 Lindenberg/Allgäu (DE)
(72) Erfinder: Schmeisser, Katy, 88171 Weiler i.A. (DE); Hauzenberger, Stefan, 14469 Potsdam (DE); Bassett, Fred, 88175 Scheidegg (DE)
(74) Vertreter: Laufhütte, Dieter

(57) **Zusammenfassung**

Die vorliegende Erfindung betrifft einen Drehmomentsensor mit einer Torsionsfeder mit einer ersten und einer zweiten Seite, welche durch ein am Drehmomentsensor anliegendes Drehmoment gegeneinander verdreht werden, wobei eine mechanische Kopplungsvorrichtung zwischen der ersten und der zweiten Seite der Torsionsfeder vorgesehen ist, welche ein Bewegungselement umfaßt, das durch eine Verdrehung der ersten Seite gegen die zweite Seite in axialer Richtung bewegt wird. Zusätzlich ist eine Meßvorrichtung zur Messung der axialen Bewegung des Bewegungselements vorhanden.

## Beschreibung

Die vorliegende Erfindung betrifft einen Drehmomentsensor, insbesondere einen Drehmomentsensor zum Erfassen des Drehmomentes im Wellenstrang eines Antriebssystems, insbesondere eines Hochauftriebsystems im Flugzeug, mit einer Torsionsfeder mit einer ersten und einer zweiten Seite, welche durch ein am Drehmomentsensor anliegendes Drehmoment gegeneinander verdreht werden. Ein solcher Drehmomentsensor wird dabei zum Beispiel in den Antriebsstrang eines Antriebssystems integriert, indem die erste und die zweite Seite mit entsprechenden Antriebswellen des Antriebsstrangs verbindbar und/oder verbunden sind.

Bisherige Drehmomentsensoren messen das Drehmoment dabei über DMS-Streifen, oder es sind Piezo- oder Magnetostriktivsensoren im Einsatz. Diese Sensoren sind jedoch nicht robust genug für eine mehrjährige Anwendung insbesondere in der Luftfahrt.

Aufgabe der vorliegenden Erfindung ist es daher, einen einfach aufgebauten und stabilen Drehmomentsensor zur Verfügung zu stellen, insbesondere einen Drehmomentsensor, welcher für eine mehrjährige Anwendung im Luftfahrtbereich robust genug ist.

Diese Aufgabe wird von einem Drehmomentsensor gemäß Anspruch 1 gelöst. Dieser umfaßt dabei eine Torsionsfeder mit einer ersten und zweiten Seite, welche durch ein am Drehmomentsensor anliegendes Drehmoment gegeneinander verdreht werden. Erfindungsgemäß ist dabei eine mechanische Kopplungsvorrichtung zwischen der ersten und der zweiten Seite der Torsionsfeder vorgesehen, welche ein Bewegungselement umfaßt, das durch eine Verdrehung der ersten Seite gegen die zweite Seite in axialer Richtung bewegt wird. Weiterhin ist eine Messvorrichtung zur Messung der axialen Bewegung des Bewegungselements vorgesehen. Erfindungsgemäß wird damit nicht die Torsion der Torsionsfeder direkt gemessen, sondern es wird die Torsion der Torsionsfeder zunächst in eine axiale Bewegung des Bewegungselements übersetzt, welche dann von der Messvorrichtung gemessen werden kann. Hierdurch ergibt sich ein einfacher und stabiler Aufbau des erfindungsgemäßen Drehmomentsensors, welcher dennoch eine zuverlässige Messung des am Drehmomentsensor anliegenden Drehmoments erlaubt.

Das von einer Antriebswelle, in welche der Drehmomentsensor integriert ist, übertragene Drehmoment verdreht dabei die erste Seite der Torsionsfeder gegen die zweite, so dass diese Verdrehung ein Maß für das übertragene Drehmoment darstellt. Diese Verdrehung wird nun über die mechanische Kopplungsvorrichtung in eine axiale Bewegung des Bewegungselementes übersetzt, so dass diese axiale Bewegung ebenfalls ein Maß für das über den Drehmomentsensor übertragene Drehmoment darstellt. Die Messung dieser Bewegung des Bewegungselements in axialer Richtung, das heißt in einer Richtung parallel zur Drehachse der Torsionsfeder, erlaubt dabei eine ebenso stabile Konstruktion wie eine sichere Messung. Insbesondere kann hierbei auf erprobte und in der Luftfahrt zugelassene Komponenten zurückgegriffen werden.

Vorteilhafterweise ist dabei das Bewegungselement mit der ersten Seite in axialer Richtung verschiebbar und in Drehrichtung momentensteif verbunden und weist ein Führungselement auf, über welches es an einem mit der zweiten Seite in Drehrichtung momentensteif verbundenen Gegenführungselement geführt ist. Durch das Zusammenwirken von Führungselement und Gegenführungselement wird dabei die von der ersten Seite auf das Bewegungselement und damit das Führungselement und die von der zweiten Seite auf das Gegenführungselement übertragene Verdrehung der ersten Seite gegen die zweite Seite in eine Bewegung des Bewegungselements in axialer Richtung umgewandelt. Das Bewegungselement ist dabei momentensteif mit der ersten Seite verbunden, dreht also mit dieser mit und ist lediglich in axialer Richtung bezüglich der ersten Seite verschiebbar, um so axial bewegt werden zu können. Das Gegenführungselement ist mit der zweiten Seite momentensteif verbunden, und dreht so mit dieser mit. Vorteilhafterweise ist das Gegenführungselement dabei starr mit der zweiten Seite verbunden, und damit auch in axialer Richtung nicht verschiebbar.

Vorteilhafterweise mißt dabei erfindungsgemäß die Messvorrichtung die axiale Bewegung des Bewegungselements bezüglich des Gegenführungselements, wobei dieses vorteilhafterweise starr mit der zweiten Seite verbunden ist. Da das Zusammenwirken von Führungselement und Gegenführungselement die Übersetzung der Verdrehung in eine axiale Bewegung hervorruft, wird vorteilhafterweise die axiale Bewegung des Bewegungselements bezüglich des Gegenführungselementes gemessen. Dabei muß die Messvorrichtung nicht direkt zwischen Bewegungselement und Gegenführungselement angeordnet sein, sondern kann zum Beispiel die Bewegung des Bewegungselements gegenüber einem Gehäuse oder einem anderen Element messen, solange das Gehäuse bzw. dieses andere Element bezüglich des Gegenführungselements in axialer Richtung unverschiebbar ist. Vorteilhafterweise ist das Gegenführungselement dabei mit der zweiten Seite starr verbunden, welche wiederum vorteilhafterweise in axialer Richtung unverschiebbar an einem Gehäuse gelagert ist, so dass die Messvorrichtung die axiale Bewegung des Bewegungselements bezüglich des Gegenführungselements auch bezüglich des Gehäuses messen kann.

Vorteilhafterweise bilden das Führungselement und das Gegenführungselement eine Kulissenführung, welche eine Verdrehung der ersten Seite gegen die zweite Seite in eine axiale Bewegung des Bewegungselements umwandelt. Eine solche Kulissenführung erlaubt dabei eine einfache mechanische Umwandlung der Verdrehung in eine axiale Bewegung, wobei auf robuste und einfach konstruierte Teile zurückgegriffen werden kann.

Vorteilhafterweise umfaßt die Kulissenführung dabei einen Führungsstift, welcher in einer eine Kurve auf einer Zylinderfläche bildenden Führungsbahn geführt ist, insbesondere eine Kurve in Form einer Schraubenlinie. Über die Steigung dieser Kurve auf einer Zylinderfläche kann dabei das Übersetzungsverhältnis zwischen Verdrehung der Torsionsfeder und axialer Bewegung eingestellt werden. Vorteilhafterweise ist dabei die eine Kurve auf einer Zylinderfläche bildende Führungsbahn am Bewegungselement angeordnet. Zum Beispiel kann das Bewegungselement dabei eine Hülsenform aufweisen, in welche die Führungsbahn in Form einer länglichen Nut oder Aussparung angebracht ist.

Vorteilhafterweise wird dabei die Verdrehung der ersten Seite gegen die zweite Seite monoton, insbesondere streng monoton, in eine axiale Bewegung des Bewegungselements übersetzt. Hierdurch bewirkt eine Verdrehung in die eine Drehrichtung immer für eine entsprechende axiale Bewegung des Bewegungselements in eine Richtung, und eine Verdrehung in die Gegenrichtung dementsprechend eine axiale Bewegung des Bewegungselements in die andere Richtung. Aus der Position des Bewegungselements kann so sicher auf eine bestimmte Verdrehung der Torsionsfeder und damit auf ein bestimmtes Drehmoment geschlossen werden.

Vorteilhafterweise sind erfindungsgemäß die erste und die zweite Seite der Torsionsfeder drehbar in einem Gehäuse gelagert. Die erste und die zweite Seite sind dabei üblicherweise in einen Antriebsstrang integriert und drehen dementsprechend um die Drehachse der Torsionsfeder mit der Antriebswelle mit. Dabei sind die erste und die zweite Seite der Torsionsfeder vorteilhafterweise mit Wellenabschnitten verbindbar und/oder verbunden. Die Lagerung am Gehäuse erfolgt dabei z.B. durch Kugel- oder Rollenlager.

Vorteilhafterweise dreht dabei das Bewegungselement mit der ersten und/oder zweiten Seite der Torsionsfeder mit, wobei die axiale Bewegung des Bewegungselements über einen Mitnehmer auf eine stationär angeordnete Messvorrichtung übertragen wird, wobei das Bewegungselement vorteilhafterweise drehbar am Mitnehmer gelagert ist. Insbesondere dreht dabei das Bewegungselement vorteilhafterweise mit der ersten Seite der Torsionsfeder mit, mit welcher es vorteilhafterweise in axialer Richtung verschiebbar und in Drehrichtung momentensteif verbunden ist. Die Messvorrichtung ist dagegen vorteilhafterweise stationär angeordnet und dreht nicht mit der Torsionsfeder mit, so dass hier eine stabile und sichere Messung möglich ist. Zur Übertragung der Bewegung des Bewegungselements auf die Messvorrichtung ist dabei ein Mitnehmer vorgesehen, an welchem das Bewegungselement vorteilhafterweise drehbar, in axialer Richtung aber unverschieblich gelagert ist, so dass sich das Bewegungselement zwar mit der ersten und/oder zweiten Seite der Torsionsfeder mitdrehen kann, die axiale Bewegung des Bewegungselements aber über den Mitnehmer sicher an die Messvorrichtung übertragen wird.

Vorteilhafterweise ist der Mitnehmer dabei in axialer Richtung verschieblich am Gehäuse geführt. Weiterhin vorteilhafter Weise ist der Mitnehmer in Drehrichtung dagegen unverschieblich am Gehäuse geführt. Der Mitnehmer kann sich somit nur in axialer Richtung bewegen, so dass eine sichere Messung vorgenommen werden kann.

Vorteilhafterweise misst die Messvorrichtung dabei die axiale Bewegung des Bewegungselements bezüglich des Gehäuses. Hierfür misst die Messvorrichtung vorteilhafterweise die axiale Bewegung des Mitnehmers bezüglich des Gehäuses. Weiterhin kann die Messvorrichtung dabei vorteilhafterweise mit dem Gehäuse starr verbunden sein, so dass sich eine stabile Anordnung ergibt.

In vorteilhafter Weise ist die erste und/oder die zweite Seite in axialer Richtung unverschieblich am Gehäuse gelagert. Weiterhin ist dabei vorteilhafterweise das Gegenführungselement gegenüber dem Gehäuse axial unverschieblich. Hierdurch kann die Messvorrichtung einfach die axiale Bewegung des Bewegungselements bezüglich des Gehäuses messen, um so die durch das Zusammenwirken zwischen Führungselement und Gegenführungselement erzeugte Bewegung des Bewegungselements bezüglich des Gegenführungselements zu messen.

Insbesondere ist hierzu die zweite Seite vorteilhafterweise in axialer Richtung unverschieblich am Gehäuse gelagert, so dass ein starr mit der zweiten Seite verbundenes Gegenführungselement in axialer Richtung unverschieblich gegenüber dem Gehäuse ist.

In vorteilhafter Weise weist der Drehmomentsensor erfindungsgemäß eine erste, mit der ersten Seite verbundene Hohlwelle und eine zweite, mit der zweiten Seite verbundene Hohlwelle auf, in deren Inneren die Torsionsfeder verläuft. Die beiden Hohlwellen drehen dabei mit der ersten bzw. der zweiten Seite der Torsionsfeder mit und bilden damit vorteilhafterweise einen Teil der mechanischen Kopplungsvorrichtung, welche hierdurch stabil und einfach aufgebaut ist.

In weiterhin vorteilhafter Weise ist dabei das Bewegungselement als Hülse ausgebildet, welche vorteilhafterweise auf oder in der mit der ersten Seite verbundenen Hohlwelle in Drehrichtung momentensteif verbunden und in axialer Richtung verschiebbar ist. Hierdurch ergibt sich eine einfache und stabile Konstruktion für Bewegungselement und mechanische Kopplungsvorrichtung. Vorteilhafterweise weist die mit der ersten Seite verbundene Hohlwelle dabei an ihrem Außenumfang oder an ihrem Innenumfang axial verlaufende Führungen auf, welche mit ebenfalls axial verlaufenden Gegenführungen an der Hülse zusammenwirken, so dass die Hülse starr mit der Hohlwelle mitdreht, in axialer Richtung jedoch verschiebbar ist.

In weiterhin vorteilhafter Weise ist an der Hülse dabei die Führungsbahn der Kulissenführung angeordnet. Das Gegenführungselement, insbesondere ein mit der Führungsbahn zusammenwirkender Führungsstift, ist dagegen vorteilhafterweise mit der mit der zweiten Seite verbundenen Hohlwelle starr verbunden.

In weiterhin vorteilhafter Weise überlappen sich die Enden der beiden Hohlwellen dabei in einem Teilbereich, wobei sie vorteilhafterweise in Drehrichtung aufeinander gleiten, so dass die Hohlwellen bei einer Verdrehung der Torsionsfeder aneinander geführt sind. Das als Hülse ausgeführte Bewegungselement kann dabei ebenfalls auf oder in der mit der zweiten Seite verbundenen Hohlwelle gleiten, wobei die Bewegung des Bewegungselements gegenüber dieser Hohlwelle durch das Zusammenwirken von Führungselement und Gegenführungselement bestimmt wird.

Die vorliegende Erfindung umfaßt weiterhin ein Antriebssystem insbesondere für die Steuerflächen eines Flugzeugs, und zwar insbesondere für ein Hochauftriebssystem, mit einem Drehmomentsensor, wie er oben beschrieben wurde, wobei der Drehmomentsensor vorteilhafterweise das von einer Antriebswelle des Antriebssystems übertragene Drehmoment misst. Insbesondere ist der Drehmomentsensor dabei vorteilhafterweise in den Antriebsstrang integriert, wobei sich die Torsionsfeder mit der Antriebswelle mitdreht.

Die vorliegende Erfindung umfaßt weiterhin ein Flugzeug mit einem Antriebssystem, wie es eben beschrieben wurde. Offensichtlich ergeben sich durch das Antriebssystem und das Flugzeug die gleichen Vorteile, wie sie bereits bezüglich des Drehmomentsensors beschrieben wurden. Insbesondere ist der erfindungsgemäße Drehmomentsensor dabei robust genug für eine mehrjährige Anwendung im Luftfahrtbereich, wobei ausschließlich auf erprobte und in der Luftfahrt zugelassene Komponenten zurückgegriffen werden kann.

Die vorliegende Erfindung wird nun anhand eines Ausführungsbeispiels sowie Zeichnungen näher dargestellt.

### Dabei zeigen

- Fig. 1: eine Schnittansicht entlang der Drehachse der Torsionsfeder eines Ausführungsbeispiels des erfindungsgemäßen Drehmo- mentsensors, und
- Fig. 2: eine Draufsicht des auch in Fig. 1 gezeigten Ausführungsbei- spiels des erfindungsgemäßen Drehmomentsensors.

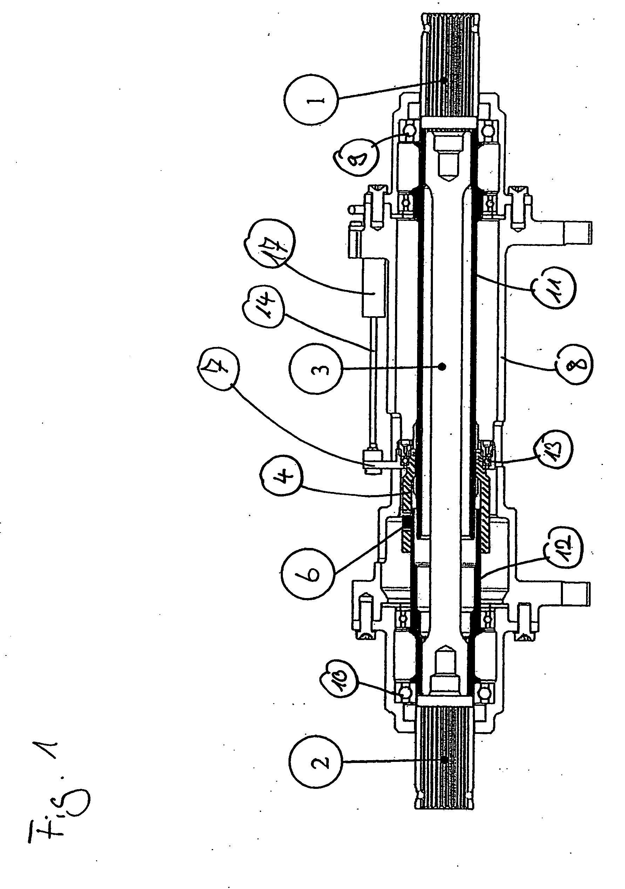

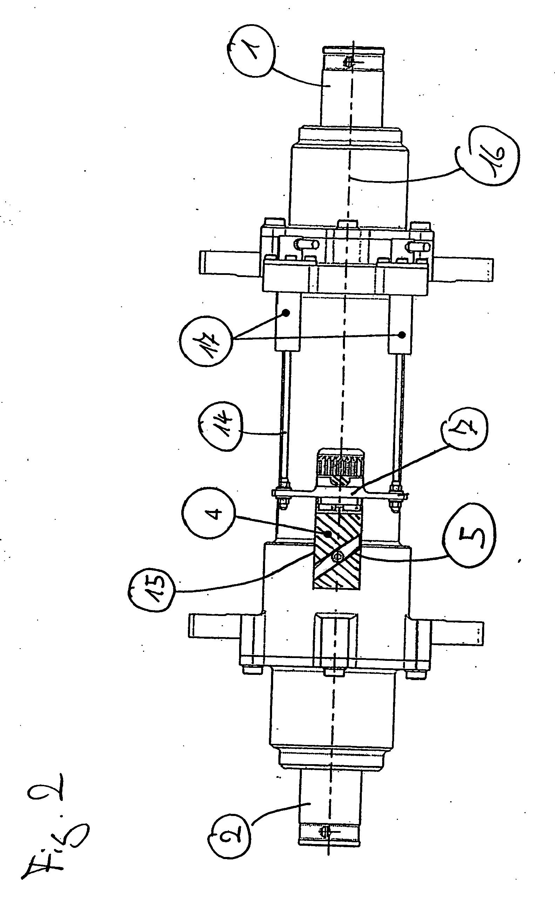

In Fig. 1 und 2 ist nun ein Ausführungsbeispiel des erfindungsgemäßen Drehmomentsensors gezeigt. Dieser weist eine Torsionsfeder 3 mit einer ersten Seite 1 und einer zweiten Seite 2 auf, wobei die Torsionsfeder 3 durch das von ihr übertragene Drehmoment in sich verdreht wird, so dass sich die erste Seite 1 gegenüber der zweiten Seite 2 in Drehrichtung verdreht. Dabei wird der erfindungsgemäße Drehmomentsensor vorteilhafterweise in einem Antriebssystem eingesetzt, wobei er das von einer Antriebswelle des Antriebssystems übertragene Drehmoment misst. Hierzu weisen die erste Seite 1 und die zweite Seite 2 Verbindungsbereiche zu Wellenabschnitten des Antriebssystems auf, über welche sie mit diesen Wellenabschnitten in Drehrichtung momentensteif verbindbar sind. Die Torsionsfeder 3 überträgt hierdurch die Rotation der Antriebswelle und wird dabei um einen Betrag verdreht, welcher vom übertragenen Drehmoment abhängt.

Der Drehmomentsensor weist dabei ein Gehäuse 8 auf, an welchem die erste Seite 1 und die zweite Seite 2 der Torsionsfeder 3 drehbar gelagert sind. Hierfür sind Kugellager 9, über welche die erste Seite 1, und Kugellager 10, über welche die zweite Seite 2 am Gehäuse 8 gelagert sind, vorgesehen. Hierdurch weist die Torsionsfeder eine Drehachse auf, um welche sie rotiert und um welche auch die Verdrehung der ersten Seite 1 gegen die zweite Seite 2 erfolgt.

Erfindungsgemäß ist nun eine Kopplungsvorrichtung zwischen der ersten Seite 1 und der zweiten Seite 2 der Torsionsfeder 3 vorgesehen, welche das Bewegungselement 4 umfaßt. Das Bewegungselement 4 wird dabei durch die Verdrehung der ersten Seite 1 gegen die zweite Seite 2 in axialer Richtung bewegt, wobei diese axiale Bewegung des Bewegungselements 4 über die Messvorrichtung 17 gemessen wird. Erfindungsgemäß wird dabei zunächst die Torsionsfeder in Abhängigkeit von dem übertragenen Drehmoment verdreht, diese Verdrehung der ersten gegen die zweite Seite über eine mechanische Kopplungsvorrichtung in eine axiale Bewegung des Bewegungselements 4 in eine Richtung parallel zur Drehachse der Torsionsfeder 3 umgewandelt und schließlich diese axiale Bewegung über die Messvorrichtung gemessen, so dass durch die Bestimmung der axialen Bewegung des Bewegungselements das übertragene Drehmoment gemessen wird.

Die mechanische Kopplungsvorrichtung zwischen der ersten und der zweiten Seite der Torsionsfeder umfaßt dabei erfindungsgemäß die starr mit der ersten Seite 1 verbundene Hohlwelle 11 sowie die starr mit der zweiten Seite 2 verbundene Hohlwelle 12, welche koaxial zur Torsionsfeder angeordnet sind und in deren Inneren diese verläuft. Die Hohlwelle 11 dreht dementsprechend mit der ersten Seite 1, die Hohlwelle 12 mit der zweiten Seite 2 der Torsionsfeder mit. Im Ausführungsbeispiel erfolgt dabei die Lagerung der ersten Seite 1 über diese Hohlwelle, ebenso wie die Lagerung der zweiten Seite 2. Das Bewegungselement 4 ist dabei mit der Hohlwelle 11 in axialer Richtung verschieblich und in Drehrichtung momentensteif verbunden, so dass es dementsprechend mit der ersten Seite 1 axial verschieblich und in Drehrichtung momentensteif verbunden ist. Dementsprechend dreht das Bewegungselement 4 mit der ersten Seite 1 mit, ist jedoch in axialer Richtung gegenüber der ersten Seite 1 verschiebbar. Im Ausführungsbeispiel ist dabei das Bewegungselement 4 als Hülse ausgeformt, welche auf der Außenseite der Hohlwelle 11 axial verschieblich angeordnet ist, wozu an der Außenseite der Hohlwelle 11 axial verlaufende Führungselemente vorgesehen sind, welche mit an der Innenseite des als Hülse ausgebildeten Bewegungselements 4 angeordneten axial verlaufenden Gegenführungselementen zusammenwirken und so die axiale Verschiebbarkeit bei in Drehrichtung momentensteifer Verbindung bewirken. Insbesondere ist dabei eine in axialer Richtung verlaufende Nut/Federanordnung vorgesehen.

Die Hohlwelle 11 und die Hohlwelle 12 überlappen sich dabei in einem Endbereich, wobei sie bei einer Verdrehung der ersten Seite gegenüber der zweiten Seite in Drehrichtung aufeinander gleiten, so dass sich hier eine stabile Konstruktion ergibt.

Die mechanische Übersetzung der Verdrehung der ersten Seite gegen die zweite Seite wird dabei durch das Zusammenwirken eines am Bewegungselement 4 angeordneten Führungselements 5 und eines an der Hohlwelle 12 angeordneten Gegenführungselements 6 bewirkt, wobei das Gegenführungselement 6 starr mit der Hohlwelle 12 verbunden ist. Führungselement 5 und Gegenführungselement 6 bilden dabei eine Kulissenführung, wobei das Führungselement 5 als Führungsbahn ausgeführt ist, in welcher das als Führungsstift ausgeführte Gegenführungselement 6 geführt ist. Wie in Fig. 2 gut zu erkennen, bildet die Führungsbahn 5 dabei eine Kurve auf einer Zylinderfläche, wobei die Zylinderfläche von dem als Hülse ausgeformten Bewegungselement 4 gebildet wird, und die Führungsbahn als längliche Aussparung in dieser Hülse ausgeformt ist. Durch die Steigung dieser Bahn wird hierdurch die Verdrehung der ersten Seite gegenüber der zweiten Seite bzw. die Verdrehung des Bewegungselements 4 gegenüber dem Gegenführungselement 6 und damit der zweiten Seite 2 in eine axiale Bewegung des Bewegungselements 4 gegenüber dem Gegenführungselement 6 übersetzt. Diese axiale Bewegung wird dabei durch die entsprechende Ausformung der Führungsbahn, insbesondere in Form einer Schraubenlinie, streng monoton in eine axiale Bewegung des Bewegungselements übersetzt. Diese axiale Bewegung des Bewegungselements wird dann über die Messvorrichtung 17 gemessen.

Hierfür ist ein Mitnehmer 7 vorgesehen, an welchem das Bewegungselement drehbar, jedoch axial unverschieblich gelagert ist, so dass die Axialbewegung des Bewegungselements 4 auf den Mitnehmer 7 übertragen wird, nicht jedoch die Rotationsbewegung. Der Mitnehmer 7 ist dabei am Gehäuse in axialer Richtung geführt, ist demnach axial verschieblich und unverdrehbar mit dem Gehäuse verbunden. Im Ausführungsbeispiel ist hierfür im Gehäuse, wie insbesondere aus Fig. 2 hervorgeht, eine längliche Aussparung entlang der Drehachse 16 vorgesehen, durch welche ein Teil des Mitnehmers 7 vom Innenraum des Gehäuses nach außen geführt ist und wodurch der Mitnehmer axial am Gehäuse geführt ist.

Die Messvorrichtungen 6, auf welche die axiale Bewegung des Bewegungselements 4 über den Mitnehmer und die Stangen 14 übertragen werden, messen demgemäß die axiale Bewegung des Bewegungselements 4 gegenüber dem Gehäuse 8. Die Messvorrichtung 17 ist dabei mit dem Gehäuse 8 verbunden. Weiterhin ist dabei die zweite Seite 2 in axialer Richtung unverschieblich am Gehäuse gelagert, so dass die von der Messvorrichtung 17 gemessene axiale Relativbewegung zwischen Bewegungselement 4 und Gehäuse 8 der axialen Relativbewegung des Bewegungselements 4 gegenüber dem Gegenführungselement 6 entspricht. Auch die erste Seite 1 ist in axialer Richtung im wesentlichen unverschieblich am Gehäuse gelagert.

Das als Hülse ausgeführte Bewegungselement 4 gleitet dabei erfindungsgemäß auf der Hohlwelle 12, so dass die Verdrehung und axiale Verschiebung zwischen Hohlwelle 12 und Bewegungselement 4, welche durch das Zusammenwirken von Führungselement 5 und Gegenführungselement 6 bestimmt wird, stabilisiert wird. Im Ausführungsbeispiel ergibt sich dabei ein Aufbau von außen verlaufendem Bewegungselement 4, der innerhalb des Bewegungselements 4 angeordneten Hohlwelle 12 und der in einem Überlappungsbereich wiederum innerhalb der Hohlwelle 12 angeordneten Hohlwelle 11. Hierdurch ergibt sich eine stabile Konstruktion, welche durch die Rotation der Torsionsfeder nicht destabilisiert wird, wobei das übertragene Drehmoment einfach und sicher über die axiale Verschiebung des Bewegungselements 4 gemessen werden kann. Das Bewegungselement 4 dreht dabei mit der Torsionsfeder 3 mit, während seine Axialbewegung über den Mitnehmer 7 auf die Messvorrichtung 17 übertragen wird, wozu das Bewegungselement 4 am Mitnehmer 7 über das Kugellager 13 axial unverschieblich aber drehbar gelagert ist.

Erfindungsgemäß kann so auf einfache und bewährte mechanische Komponenten zurückgegriffen werden, um so einen robusten Drehmomentsensor zur Verfügung zu stellen, welcher auch für eine mehrjährige Anwendung im Luftfahrtbereich einsetzbar ist. Insbesondere kann der erfindungsgemäße Drehmomentsensor dabei zum Erfassen des Drehmoments im Wellenstrang eines Hochauftriebssystems eines Flugzeuges eingesetzt werden.

## Patentansprüche

1. Drehmomentsensor mit einer Torsionsfeder mit einer ersten und einer zweiten Seite, welche durch ein am Drehmomentsensor anliegendes Drehmoment gegeneinander verdreht werden, **gekennzeichnet durch**
eine mechanische Kopplungsvorrichtung zwischen der ersten und der zweiten Seite der Torsionsfeder, welche ein Bewegungselement umfaßt, das **durch** eine Verdrehung der ersten Seite gegen die zweite Seite in axialer Richtung bewegt wird, und **durch** eine Messvorrichtung zur Messung der axialen Bewegung des Bewegungselements.

2. Drehmomentsensor nach Anspruch 1, wobei das Bewegungselement mit der ersten Seite in axialer Richtung verschiebbar und in Drehrichtung momentensteif verbunden ist und ein Führungselement aufweist, über welches es an einem mit der zweiten Seite in Drehrichtung momentensteif verbundenen Gegenführungselement geführt ist.

3. Drehmomentsensor nach Anspruch 2, wobei die Messvorrichtung die axiale Bewegung des Bewegungselements bezüglich des Gegenführungselements mißt, wobei dieses vorteilhafterweise starr mit der zweiten Seite verbunden ist.

4. Drehmomentsensor nach Anspruch 2, wobei Führungselement und Gegenführungselement eine Kulissenführung bilden, welche eine Verdrehung der ersten Seite gegen die zweite Seite in eine axiale Bewegung des Bewegungselement umwandelt.

5. Drehmomentsensor nach Anspruch 4, wobei die Kulissenführung einen Führungsstift umfaßt, welcher in einer eine Kurve auf einer Zylinderfläche bildenden Führungsbahn geführt ist, insbesondere einer Kurve in Form einer Schraubenlinie.

6. Drehmomentsensor nach einem der vorangegangenen Ansprüche, wobei eine Verdrehung der ersten Seite gegen die zweite Seite monoton, insbesondere streng monoton, in eine axiale Bewegung des Bewegungselements übersetzt wird.

7. Drehmomentsensor nach einem der vorangegangenen Ansprüche, wobei die erste und die zweite Seite der Torsionsfeder drehbar in einem Gehäuse gelagert sind.

8. Drehmomentsensor nach Anspruch 7, wobei das Bewegungselement mit der ersten und/oder zweiten Seite der Torsionsfeder mitdreht und die axiale Bewegung des Bewegungselements über einen Mitnehmer auf die stationär angeordnete Messvorrichtung übertragen wird, wobei das Bewegungselement vorteilhafterweise drehbar am Mitnehmer gelagert ist.

9. Drehmomentsensor nach Anspruch 7, wobei die Messvorrichtung die axiale Bewegung des Bewegungselements bezüglich des Gehäuses mißt.

10. Drehmomentsensor nach Anspruch 7, wobei die erste und/oder die zweite Seite in axialer Richtung unverschieblich am Gehäuse gelagert ist.

11. Drehmomentsensor nach Anspruch 2 und 7, wobei das Gegenführungselement gegenüber dem Gehäuse axial unverschieblich ist, insbesondere indem es starr mit der axial unverschieblich am Gehäuse gelagerten zweiten Seite verbunden ist.

12. Drehmomentsensor nach einem der vorangegangenen Ansprüche, mit einer ersten, mit der ersten Seite verbundenen Hohlwelle und einer zweiten, mit der zweiten Seite verbundenen Hohlwelle, in deren Inneren die Torsionsfeder verläuft.

13. Drehmomentsensor nach einem der vorangegangenen Ansprüche, wobei das Bewegungselement als Hülse ausgebildet ist, welche vorteilhafterweise auf oder in einer mit der ersten Seite verbundenen Hohlwelle in Drehrichtung momentensteif in axialer Richtung verschiebbar ist.

14. Antriebssystem insbesondere für die Steuerflächen eines Flugzeug, mit einem Drehmomentsensor nach einem der vorangegangenen Ansprüche, wobei der Drehmomentsensor vorteilhafterweise das von einer Antriebswelle des Antriebssystems übertragene Drehmoment mißt.

15. Flugzeug mit einem Antriebssystem nach Anspruch 14.
